# DEMANDE DE BREVET EUROPEEN

(11) **EP 0 976 539 A1**
(43) Date de publication de la demande: **02.02.2000**
(21) Numéro de dépôt: 99401894.3
(22) Date de dépôt: 26.07.1999
(51) Int. Cl.: B31B 37/00, B65B 9/20, B31B 1/40

(54) **Procédé de fabrication de sacs à fond plat et machine pour sa mise en oeuvre**

(30) Priorité: 28.07.1998 FR 9809617
(71) Demandeur: FLEXICO-FRANCE, 60119 Henonville (FR)
(72) Inventeur: Ausnit, Steven, New York City, NY 10021 (US)
(74) Mandataire: Texier, Christian

(57) **Abrégé**

L'invention concerne un procédé de fabrication de sacs à fond plat, caractérisé en ce qu'il comprend les étapes consistant à :
- conformer un tube (14) avec une première feuille (10) ;
- acheminer une deuxième feuille (20), pliable à température ambiante, à une extrémité du tube (14) à plat et perpendiculairement à l'axe du tube (14) ; et
- attacher, à cette extrémité du tube (14), la deuxième feuille (20) pour former le fond (31) plat d'un sac (30), sans plier la première feuille (10).

## Description

L'invention concerne le domaine de l'ensachage et de la fabrication de sacs et sachets et plus précisément de sacs et sachets à fond plat. Notamment, il peut s'agir de sacs et sachets en matière plastique.

On connaît déjà de nombreux procédés de fabrication de sacs et sachets à fond plat.

Par exemple, les documents FR 2 325 568, EP 285 940 et EP 089 648 enseignent différents modes de réalisation de tels sacs à fond plat.

Plus précisément, le document FR 2 325 568 indique que l'on peut réaliser de tels sacs
- en aplatissant un tube pour former deux panneaux symétriques,
- en ramenant l'un contre l'autre ces deux panneaux,
- en pliant les panneaux de manière à réaliser deux rabats formant deux bandes parallèles au fond du sac et s'étendant perpendiculairement dans deux directions opposées, à partir des panneaux, ainsi que des goussets triangulaires symétriques aux extrémités longitudinales des rabats, et
- en soudant un feuillet aux rabats et aux goussets.

Le document EP 285 940 montre aussi comment réaliser un sac à fond plat
- en aplatissant une extrémité d'un tube pour former deux panneaux symétriques,
- en repliant une partie des panneaux perpendiculairement pour former des rabats s'étendant dans deux directions opposées,
- en repliant encore les rabats sur eux mêmes pour les faire se recouvrir et achever de former le fond du sac, et en
- soudant une bande sur les rabats pour les maintenir ensemble.

Le document EP 089 658 enseigne la réalisation d'un sac à fond plat
- en aplatissant et soudant transversalement une extrémité d'un corps tubulaire pour former deux parois soudées entre elles et
- en pliant les coins situés de chaque côté longitudinal de la soudure pour permettre la mise à plat du fond.

Dans ces trois documents, le fond plat est réalisé en aplatissant une extrémité d'un tube pour ramener l'un contre l'autre deux panneaux symétriques avant d'effectuer un pliage de cette extrémité du tube pour mettre à plat, perpendiculairement aux panneaux, le fond du tube.

Un but de l'invention est de faire évoluer les procédés de fabrication de sacs à fond plat et de trouver une manière différente de réaliser de tels sacs.

Ce but est atteint grâce à un procédé de fabrication de sacs à fond plat, caractérisé en ce qu'il comprend les étapes consistant à :
- conformer un tube avec une première feuille ;
- acheminer une deuxième feuille, pliable à température ambiante, à une extrémité du tube, à plat et perpendiculairement à l'axe du tube ; et
- attacher, à cette extrémité du tube, la deuxième feuille pour former le fond plat d'un sac, sans plier la première feuille.

Ainsi, contrairement aux sacs et sachets de l'art antérieur, le fond du sac réalisé grâce au procédé selon l'invention, n'est pas réalisé par pliage d'une extrémité du tube. La deuxième feuille forme le fond du sac et est attachée par ses bords au bord interne ou externe de l'extrémité du tube. Sur la partie du fond du sac qui est à plat, il n'y a donc pas de plis. Cette configuration offre une plus grande résistance que les fonds plats pliés.

De plus, la deuxième feuille est pliable à température ambiante, c'est à dire souple. Le matériau constitutif de la deuxième feuille peut se déformer sans apport de chaleur.

Avantageusement, la première feuille l'est également. Ainsi, les sacs formés grâce au procédé conforme à l'invention peuvent être pliés, avant ou après usage, pour être stockés, jetés ou recyclés. La souplesse des première et deuxième feuilles permet également de réaliser plus aisément des conditionnements sous vide, les parois et le fond du sac pouvant épouser plus facilement les contours du contenu du sac.

Avantageusement, les première et deuxième feuilles sont constituées de polypropylène, de Nylon®, de polyester, de polyethylène, etc. ou des composés obtenus en combinant plusieurs de ces matériaux.

Avantageusement encore, la première et la deuxième feuille sont constituées de la même matière.

Avantageusement, l'attache de la deuxième feuille au tube est réalisée par soudage.

Un autre avantage du procédé selon l'invention réside dans le fait que l'on peut choisir des couleurs différentes pour la première et la deuxième feuilles afin d'obtenir un fond d'une couleur différente de celle des parois du sachet.

Selon un autre aspect, l'invention concerne une machine de formation de sacs comprenant :
- des moyens pour conformer un tube avec une première feuille (10) ;
- des moyens pour acheminer une deuxième feuille à l'extrémité du tube, à plat et perpendiculairement à l'axe du tube ; et
- des moyens pour plier la deuxième feuille à température ambiante et attacher cette deuxième feuille à ladite extrémité du tube, pour former le fond plat d'un sac, sans plier la première feuille.

D'autres aspects, buts et avantages apparaîtront à la lecture de la description détaillée qui suit et à l'aide des références aux dessins joints sur lesquels :
- la figure 1 représente schématiquement une vue d'ensemble d'un exemple de machine pour la mise en oeuvre du procédé selon l'invention ;
- la figure 2 représente schématiquement une coupe passant par l'axe de la goulotte de remplissage de la machine représentée à la figure 1 et perpendiculairement à deux parois opposées de cette goulotte, le positionnement des première et deuxième feuilles au niveau d'une étape du procédé selon l'invention ;
- la figure 3 est une représentation analogue à celle de la figure 2 à une étape ultérieure du procédé selon l'invention ;
- la figure 4 est une vue de dessous d'une section de film pour former un fond plat et du plateau maintenant cette section ;
- la figure 5 est une représentation schématique en coupe perpendiculaire à celle de la figure 3, au niveau du plan V-V, à la même étape du procédé selon l'invention ;
- la figure 6 est une représentation analogue à celle des figures 2 et 3 à une étape ultérieure du procédé selon l'invention ;
- les figures 7a et 7b sont des vues de dessus d'une section de film présentant des découpes dans les coins ;
- la figure 8 est une représentation analogue à celle des figures 2, 3 et 6 à une étape ultérieure du procédé selon l'invention ;
- la figure 9 est une représentation analogue à celle des figures 2, 3 6 et 8, à une étape ultérieure du procédé selon l'invention ;
- la figure 10 est une représentation analogue à celle des figures 2, 3, 6, 8 et 9 à une étape ultérieure du procédé selon l'invention ;
- la figure 11 est une représentation analogue à celle des figures 2, 3, 6, 8, 9 et 10 à une étape ultérieure du procédé selon l'invention ;
- la figure 12 est une vue en élévation de dessus d'un sachet réalisé grâce au procédé selon l'invention, à une étape précédant la fermeture du haut de celui-ci ;
- la figure 13 est une vue en élévation de dessus du sachet représenté à la figure 12 à un instant postérieur à celui correspondant à la figure 12;
- la figure 14 est une vue en perspective d'un exemple de sachet fabriqué par le procédé selon l'invention ;
- la figure 15 est une représentation analogue à celle des figures 2, 3, 6, 8, 9, 10 et 11 d'une variante de mise en oeuvre du procédé selon l'invention, au niveau d'une étape correspondant à celle de la figure 3 ;
- les figures 16a et 16b sont des représentations analogues à celle de la figure 15, à des étapes ultérieures ;
- la figure 17 représente un sachet obtenu à l'issue d'une étape d'une variante du procédé selon l'invention; la figure 17a est une coupe longitudinale médiane d'un tel sachet; la figure 17b est une vue en élévation latérale selon une direction parallèle au plan de coupe de la figure 17a;
- les figures 18a et 18b représentent un sachet obtenu après une étape du procédé selon l'invention, postérieure à celle correspondant à la figure 17, selon une coupe et une vue respectivement équivalentes aux figures 17a et 17b ;
- les figures 19a et 19b représentent un sachet obtenu après une étape du procédé selon l'invention, postérieure à celle correspondant à la figure 18 ; les figures 19a et 19b sont des vues en élévation latérale selon deux directions perpendiculaires l'une à l'autre.

Selon un exemple particulier mais non limitatif, le procédé selon l'invention est mis en oeuvre sur des machines dites de formation, remplissage et fermeture automatiques (soit selon la dénomination anglaise, FFS, c'est à dire Form, Fill and Seal Machines).

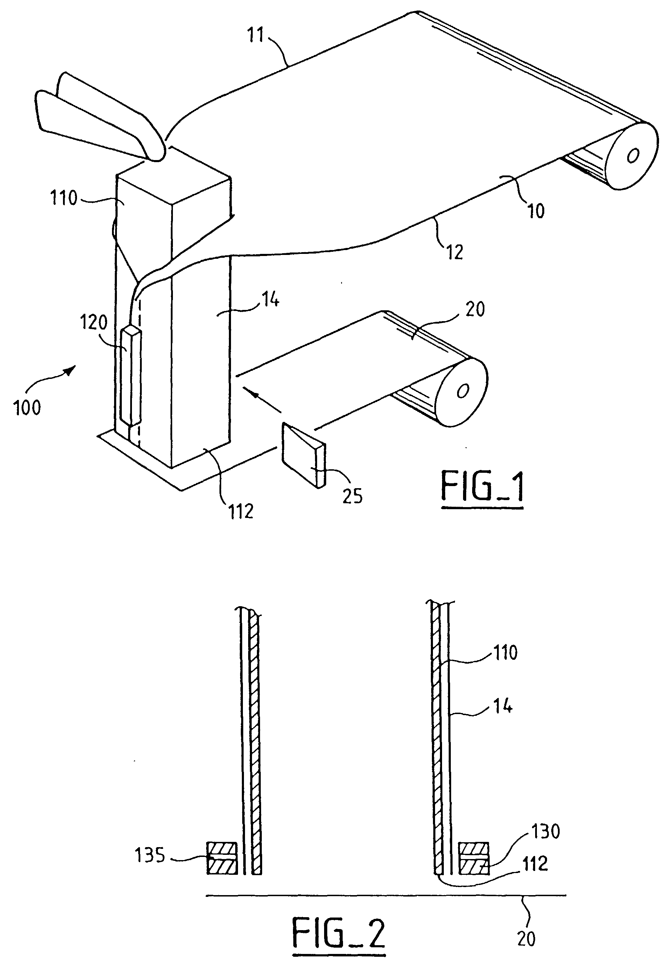

Avantageusement, il peut s'agir d'une machine FFS 100 verticale comme celle représentée sur la figure 1. Une telle machine est munie d'une goulotte 110 de remplissage verticale. Cette goulotte 110 peut avoir une section perpendiculaire à son axe vertical, carrée, rectangulaire, ronde, ovale ou de toute forme polygonale. Eventuellement, les coins de l'extrémité inférieure 112 de la goulotte 110 sont arrondis.

Comme représenté sur la figure 1, une première feuille 10 est acheminée vers la goulotte 110 . La première feuille 10 est enroulée autour de la goulotte 110. Les bords longitudinaux 11, 12 de la première feuille 10 sont ramenés l'un sur l'autre, en amont de moyens de soudage longitudinaux 120, pour former un tube 14. Les bords longitudinaux 11, 12 de la première feuille 10 sont soudés l'un à l'autre par les moyens de soudage longitudinaux 120.

Comme représenté à la figure 2, le bord inférieur du tube 14 arrive juste au niveau de l'extrémité inférieure 112 de la goulotte 110.

Une deuxième feuille 20 est acheminée en direction de la goulotte 110. La deuxième feuille 20 est amenée en dessous de l'extrémité libre du tube 14 et de l'extrémité inférieure 112 de la goulotte 110. La largeur de la deuxième feuille est telle qu'elle dépasse de la goulotte 110 de manière à obtenir une bande périphérique 22, s'étendant au delà de la surface de la section inférieure de la goulotte 110.

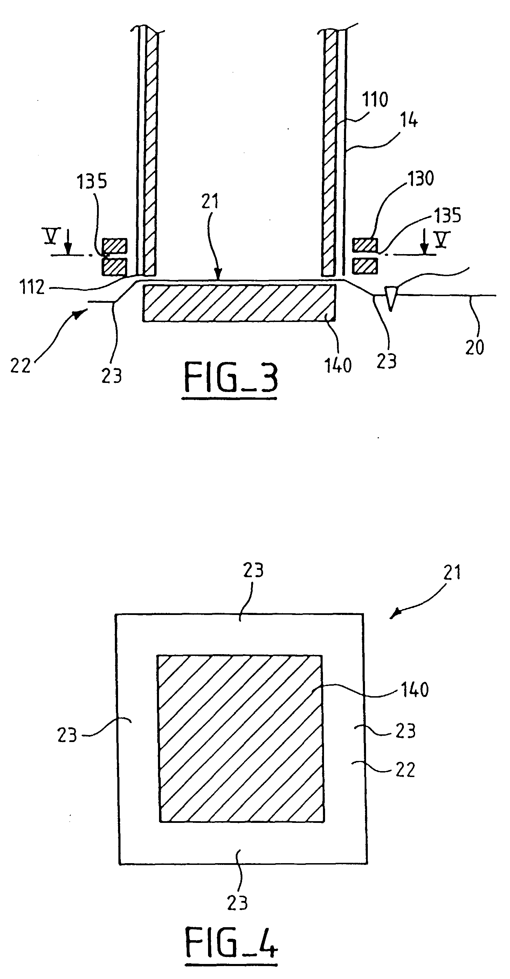

Comme représenté à la figure 3, un plateau 140 vient serrer le film 20 et le maintenir contre l'extrémité inférieure 112.

Le plateau 140 a une épaisseur approximativement égale à la dimension verticale de premiers moyens de soudage transversaux 130. Un outil de coupe 125 permet de découper dans la deuxième feuille 20, après son positionnement et son maintien sous la goulotte 110, une portion 21. Cette portion 21 a une aire légèrement supérieure à celle correspondant à la section de la goulotte 110. La portion ainsi découpée, dépasse de chaque côté de la goulotte 110 d'une section 23 de la bande périphérique 22. La largeur de la bande périphérique 22 de cette portion 21 qui dépasse de la goulotte 110 peut s'étendre d'une fraction de centimètres à quelques centimètres (figure 4)

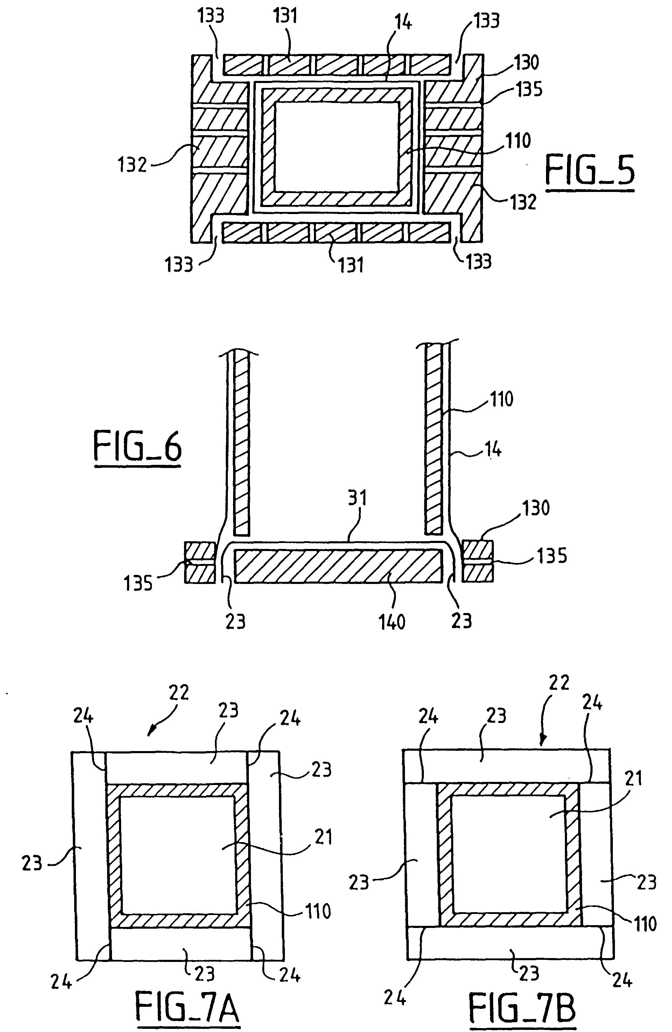

Comme représenté à la figure 5, les premiers moyens de soudage transversaux 130, sont approchés de l'extrémité inférieure du tube 14. Les premiers moyens de soudage transversaux 130 sont disposés tout autour de la goulotte 110. Les premiers moyens de soudage transversaux 130 sont au moins aussi longs que les largeurs des parois de la goulotte 110, de manière à être appliqués sur toute ces largeurs lorsqu'ils sont en position refermée. Lorsqu'ils sont en position ouverte, comme à cette étape ci, les extrémités de chacun d'eux sont légèrement écartées de celles des autres.

Les premiers moyens de soudage transversaux 130 comprennent deux barres courtes 131 parallèles et deux barres longues 132 perpendiculaires aux deux barres courtes 131. Les extrémités des deux barres longues 132 comportent des encoches 133 dans lesquelles viennent se loger les extrémités des deux barres courtes 131, afin de former une soudure sur tout le périmètre de la bande périphérique 22, avec l'extrémité du tube 14.

Des premiers moyens d'aspiration 135 sont réalisés dans les premiers moyens de soudage transversaux 130. Ces premiers moyens d'aspiration 135 permettent de maintenir l'extrémité des parois du tube 14.

Comme représenté à la figure 6, une fois l'extrémité des parois du tube 14 aspirée au travers des premiers moyens d'aspiration 135, les premiers moyens de soudage transversaux 130 sont déplacés vers le bas d'une distance équivalente à la largeur de la bande périphérique 22. Ainsi, ils plaquent les sections 23 de la bande périphérique 22 contre la face interne des parois de l'extrémité du tube 14.

Entre les bords du plateau 140 et les premiers moyens de soudage transversaux 130, se trouvent maintenant insérées l'extrémité des parois du tube 14 et le bord périphérique 22 de la portion 21.

Pour faciliter le pliage de la bande périphérique 22, des découpes 24 de la largeur de la bande périphérique 22 peuvent être effectuées à chaque extrémité des sections 23. Plusieurs géométries sont possibles pour ces découpes 24. Les figures 7A et 7B en illustrent deux exemples.

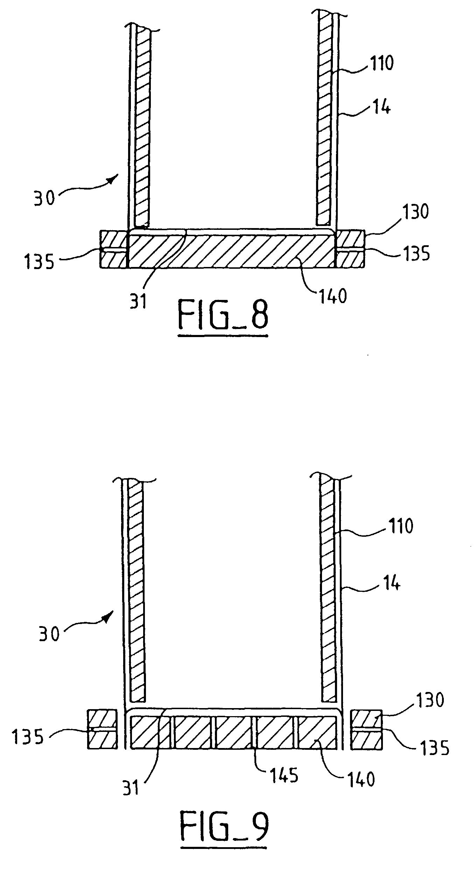

Comme représenté à la figure 8, les premiers moyens de soudage transversaux 130 sont alors rapprochés les uns des autres. Ils sont pressées sur les bords du plateau 140, perpendiculaires au fond plat 31 du sac 30. Ils serrent et soudent ensemble les première 10 et deuxième 20 feuilles, tout autour du périmètre du plateau 140. Les bords périphériques de la portion 21 de la deuxième feuille sont ainsi soudés sur la face interne des parois du tube 14.

Comme représenté à la figure 9, à l'étape suivante, l'aspiration dans les premiers moyens d'aspiration 135 est arrêtée, les premiers moyens de soudage transversaux 130 sont écartés les uns des autres et une aspiration est générée à travers des deuxièmes moyens d'aspiration 145, réalisés dans le plateau et aptes à maintenir le fond 31 du sac 30 sur le plateau 140.

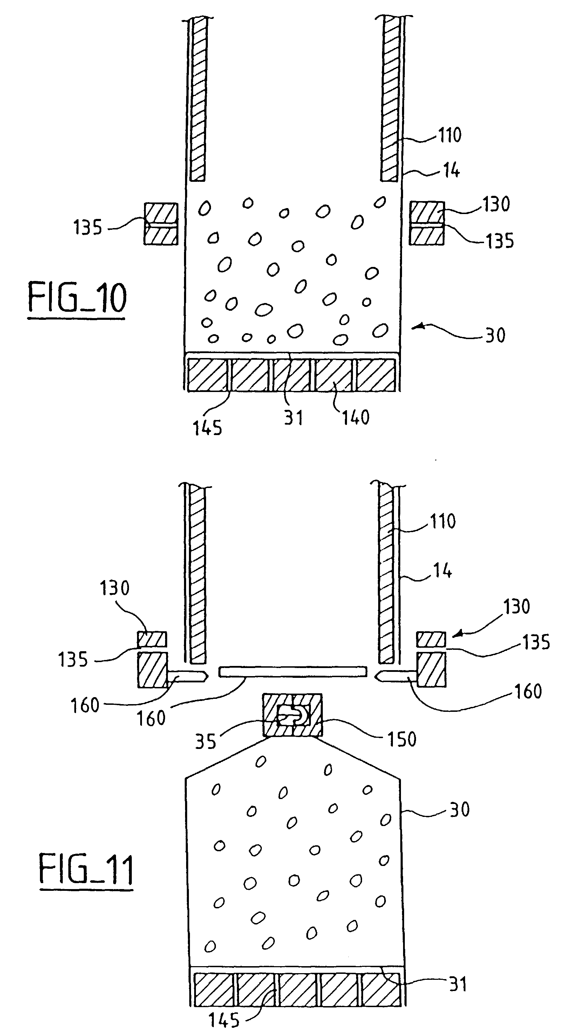

Comme représenté à la figure 10, le plateau 140 est ensuite déplacé verticalement vers le bas, de manière à entraîner le sac 30 le long de la goulotte 110 de remplissage, d'une longueur de tube 14 équivalente à une hauteur de sachet 30. Simultanément, le sachet 30 peut être rempli de son contenu.

Comme représenté à la figure 11, pendant que le sachet 30 est rempli, les premiers moyens de soudage transversaux 130 remontent à leur position initiale et des moyens de coupe 160 localisés dans les premiers moyens de soudage transversaux 130 coupent le tube 14 au niveau du haut du sac 30.

Le haut du sac 30 est alors fermé et soudé par des deuxièmes moyens de soudage transversaux 150 qui soudent les parois du sac 30 entre elles. Selon une variante, celle représentée sur la figure 11, un dispositif de fermeture 35 est fixé à cette extrémité. Eventuellement, le dispositif de fermeture 35 est muni d'un curseur de fermeture.

Si un dispositif de fermeture 35 a été présoudé à la première feuille 10, par exemple en amont de la goulotte 110, les deuxièmes moyens de soudage transversaux 150 sont adaptés pour souder les parois du sachet 30 au dispositif de fermeture 35, sans écraser les profilés de fermeture de ce dernier. Dans ce cas, les barres de soudage des deuxièmes moyens de soudage transversaux 150 présentent une rainure longitudinale dans laquelle se logent les profilés de fermeture pendant cette étape de soudage.

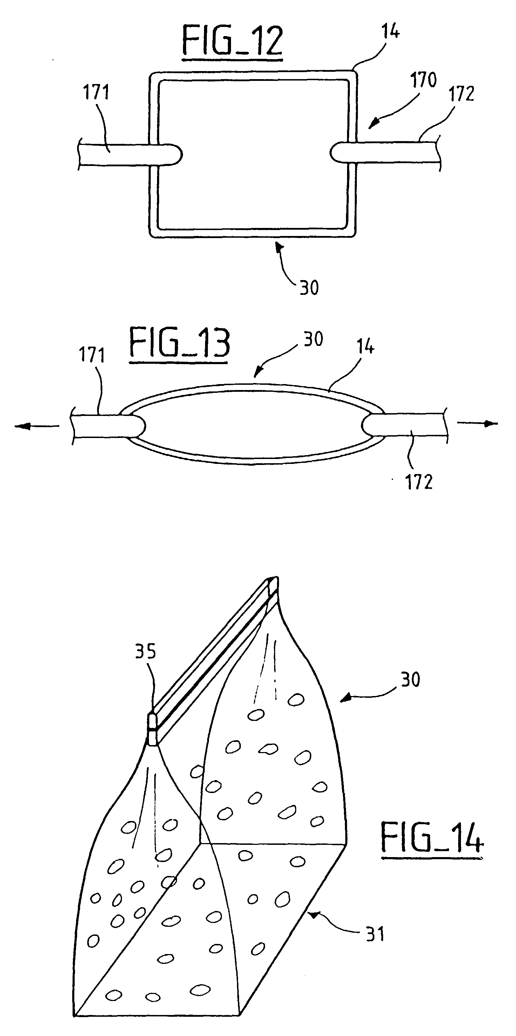

Comme représenté sur les figures 12 et 13, des doigts 171, 172 peuvent être insérés par le haut du sac 30 pour faciliter cette étape de fermeture et soudage, et tirer le bord libre supérieur et ouvert de ce sac 30, de manière à former deux bords parallèles à l'axe longitudinal des deuxièmes moyens de soudage transversaux 150. Ces doigts sont retirés du sac 30 lorsque les deuxièmes moyens de soudage transversaux 150 se resserrent l'un sur l'autre pour fermer le sac 30.

Une fois le sac 30 achevé, l'aspiration par les deuxièmes moyens d'aspiration 145 est arrêtée, le sac est poussé sur le côté du plateau 140.

Si aucun dispositif de fermeture 35 n'a été pré-soudé à la première feuille 10, un dispositif de fermeture peut être rapporté sur le sachet 30 après que celui-ci ait été rempli.

Le sac 30 ainsi obtenu est représenté sur la figure 14.

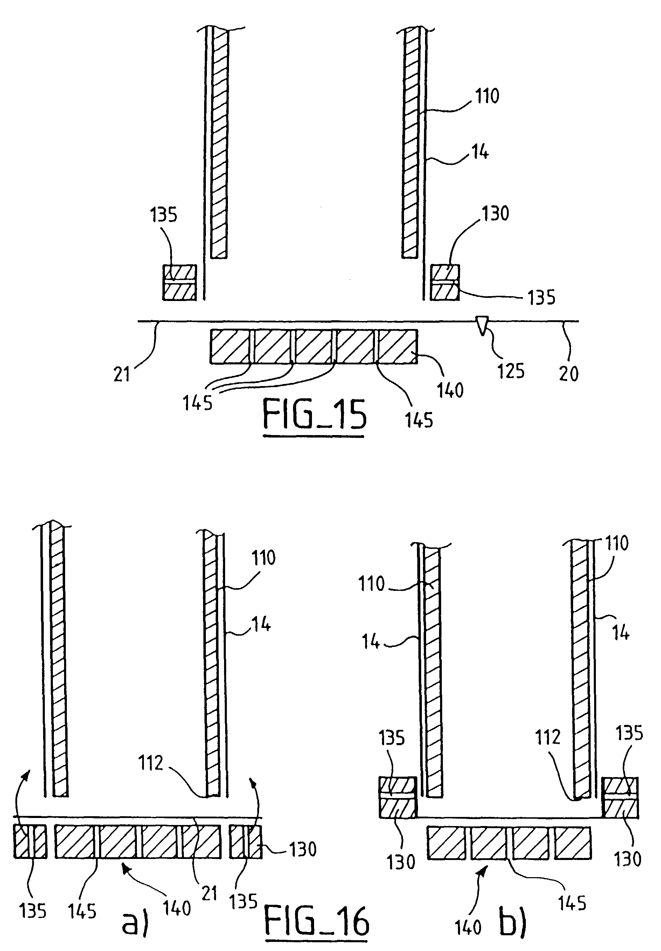

Selon une variante du procédé selon l'invention, lorsque le tube 14 est formée autour de la goulotte 110, au cours des premières étapes du procédé selon l'invention, au lieu d'être acheminé de manière à arriver juste au niveau de l'extrémité 112 de la goulotte 110 (comme sur la figure 2), il est descendu légèrement en dessous de l'extrémité inférieure 112 de la goulotte 110. Le tube 14 dépasse de l'extrémité inférieure 112 d'une fraction de centimètres à quelques centimètres. (figure 15).

Le plateau 140 est alors amené sous la deuxième feuille 20. Ce plateau 140 a des dimensions adaptées pour pouvoir pénétrer dans le tube 14, globalement perpendiculairement à l'axe de celui-ci. Ces dimensions sont donc légèrement inférieures à celles de la section transversale du tube 14.

Tandis qu'éventuellement le film 20 est maintenu sur le plateau 140 grâce à des moyens d'aspiration 145, un outil de coupe 125 découpe une portion 21 de la deuxième feuille 20.

Un déplacement relatif du plateau 140 par rapport au tube 14 est ensuite opéré vers le haut, selon une direction parallèle à l'axe du tube 14, pour pousser la portion 21 de la deuxième feuille 20 et la faire pénétrer dans l'extrémité libre du tube 14 afin d'obturer cette dernière, et former un fond plat 31. Le plateau 140, dans ce déplacement, provoque l'insertion de la portion 21 entre les premiers moyens de soudage transversaux 130.

On obtient alors une configuration analogue à celle représentée sur la figure 6 et le procédé peut se poursuivre selon les étapes déjà décrites.

Selon une autre variante du procédé selon l'invention, les bords de la portion 21 sont soudés sur la face externe des parois du tube 14.

Comme représenté sur la figure 16, une fois la portion 21 découpée à partir de la deuxième feuille 20, elle est positionnée sous la goulotte 110. Les premiers moyens de soudage transversaux 130 disposés parallèlement aux quatres faces de la goulotte 110 et munis de premiers moyens d'aspiration 135 sont amenés sous les bords de la portion 21. Le bord libre du tube 14 est positionné au niveau du bord libre 112 de la goulotte 110 sans en dépasser (fig. 16a). Une aspiration est générée par l'intermédiaire des premiers moyens d'aspiration 135, qui permet de maintenir les sections 23 de la bande périphérique 22 sur les premiers moyens de soudage transversaux 130. Ces derniers pivotent autour d'un axe parallèle à leur direction longitudinale pour venir plaquer les sections 23 contre la face externe des parois du tube 14 (figure 16b).

Selon une variante du procédé selon l'invention, celui-ci comprend une étape consistant à déplacer les premiers moyens de soudage transversaux 130 vers le haut le long de la goulotte 110, au lieu de les faire pivoter.

Avantageusement aussi, le bord de l'extrémité libre du tube 14 est maintenu en position grâce à une aspiration par des moyens d'aspiration prévus dans la goulotte 110.

Les premiers moyens de soudage transversaux 130 se resserrent ensuite sur les parois de la goulotte 110 pour souder les sections 23 sur la face externe des parois du tube 14.

Avantageusement encore, lorsque les sections 23 sont soudées sur la face externe du tube 14, il peut être nécessaire, notamment lorsque la deuxième feuille 20 est un complexe laminé, de disposer un adhésif approprié à l'endroit où seront réalisées les soudures.

Les opérations de remplissage et fermeture du sachet 30 sont ensuite analogues à celles déjà décrites ci-dessus.

Selon encore un autre mode de réalisation de l'invention, le dessus du sachet 30 est réalisé de manière analogue à celle décrite ci-dessus pour la réalisation du fond 31, ceci afin de réaliser un dessus plat 32.

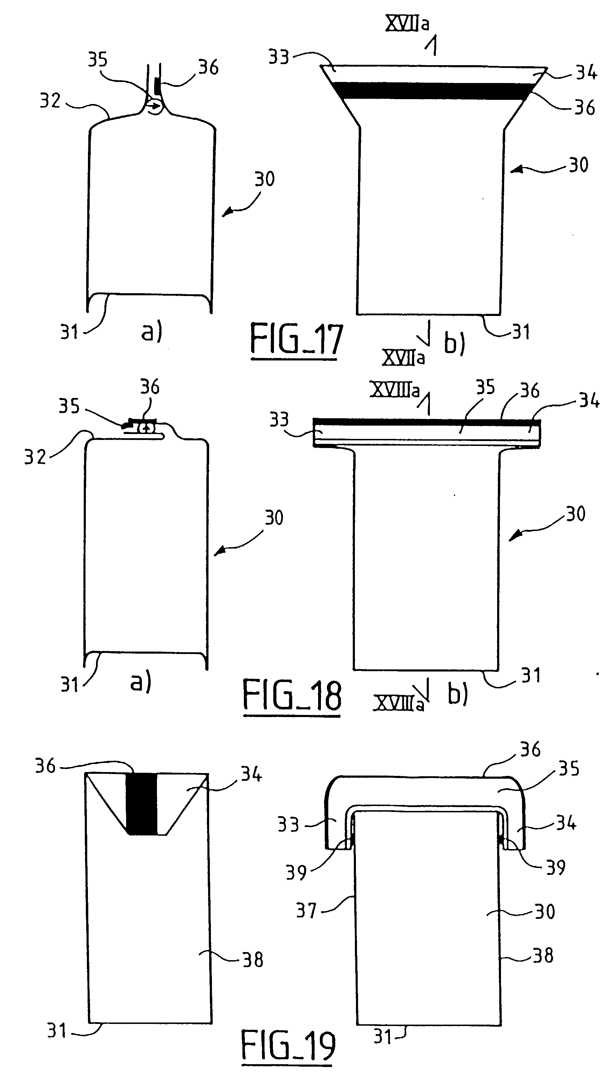

Un dessus plat 32 carré ou rectangulaire peut aussi être réalisé de la façon illustrée par les figures 17 à 19. Après remplissage, le haut du sachet 30 est fermé par soudage du haut de ses parois, avec ou sans dispositif de fermeture 35, par exemple, selon l'une des variantes du procédé selon l'invention, exposée ci-dessus.

La figure 17 représente un sachet 30 rempli et fermé par un dispositif de fermeture 35 soudé entre les parois de ce sachet 30. Le haut du sachet 30 est aplati (fig. 17a) de manière à former des coins 33, 34 situés de chaque côté longitudinal du dispositif de fermeture 35 (fig. 17b).

Un élément de maintien 36 est placé à proximité du bord supérieur du sachet 30 et parallèlement à ce bord. Préférentiellement, cet élément de maintien 36 a des propriétés de plasticité et rigidité telles qu'il est apte à conserver la forme qui lui est donnée par déformation.

La figure 18 représente un sachet 30 obtenu à l'issue de l'étape suivante du procédé selon l'invention. Au cours de cette étape, le haut des parois du sachet 30 est plié pour être ramené, de manière à être parallèle au dessus plat 32 du sachet 30 et contre ce dessus plat (fig. 18a). Les coins 33, 34 dépassent de deux des parois latérales 37, 38 du sachet 30 (fig. 18b).

Ces coins 33, 34 sont alors rabattus sur ces parois latérales 37, 38, par pliage (fig. 19). L'élément de maintien 36 maintient ces coins 33, 34 en position contre ces parois latérales 37, 38 (fig. 19a). Des points de collage et/ou soudage 39 peuvent être utilisés en remplacement ou en compléments de l'élément de maintien 36 (fig. 19b).

Par exemple, il peut s'agir d'un point de collage 39 qui peut permettre de décoller et soulever les coins 33, 34 puis de les recoller réversiblement plusieurs fois. Il peut aussi s'agir d'un soudage réalisé à la fabrication qui témoigne du caractère inviolé du sachet 30, mais qui est complété d'un élément de maintien 36 qui permet à l'utilisateur de rabattre les coins 33, 34 dans leur position d'origine après usage.

Certaines des opérations décrites ci-dessus de manière séquentielle peuvent être réalisées simultanément à certaines autres.

## Revendications

1. Procédé de fabrication de sacs à fond plat, caractérisé en ce qu'il comprend les étapes consistant à :
- conformer un tube (14) avec une première feuille (10) ;
- acheminer une deuxième feuille (20), pliable à température ambiante, à une extrémité du tube (14), à plat et perpendiculairement à l'axe du tube (14) ; et
- attacher, à cette extrémité du tube (14), la deuxième feuille (20) pour former le fond (31) plat d'un sac (30), sans plier la première feuille (10).

2. Procédé selon la revendication 1, caractérisé par le fait que l'attache de la deuxième feuille (20) au tube (14) est réalisée par soudage.

3. Procédé selon l'une des revendications 1 et 2, caractérisé par le fait qu'il comprend en outre, l'étape consistant à aspirer l'extrémité des parois du tube (14) à travers des premiers moyens d'aspiration (135) réalisés dans des premiers moyens de soudage transversaux (130).

4. Procédé selon l'une des revendications 1 à 3, caractérisé par le fait qu'il comprend une étape consistant à déplacer vers le bas, les premiers moyens de soudage transversaux (130), d'une distance équivalente à la largeur d'une bande périphérique (22), selon une direction parallèle à l'axe du tube (14), pour plaquer des sections (23) de la bande périphérique (22) contre la face interne des parois de l'extrémité du tube (14).

5. Procédé selon la revendication 4, caractérisé par le fait que des découpes (24) de la largeur d'une bande périphérique (22) peuvent être effectuées à chaque extrémité des sections (23) constituant la bande périphérique (22), afin de faciliter le pliage de cette dernière.

6. Procédé selon l'une des revendications précédentes, caractérisé par le fait qu'une portion (21) de la deuxième feuille (20) est soudée sur la face interne des parois du tube (14).

7. Procédé selon l'une des revendications précédentes, caractérisé par le fait que la deuxième feuille (20) est soudée à la première feuille (10) en pressant des premiers moyens de soudage transversaux (130), perpendiculaires au fond plat (31) du sac (30), sur les bords d'un plateau (140).

8. Procédé selon la revendication 7, caractérisé par le fait qu'il comprend en outre les étapes consistant à
- générer une aspiration à travers des deuxièmes moyens d'aspiration (145) réalisés dans le plateau (140) et aptes à maintenir le fond (31) du sac (30) sur le plateau (140) ;
- déplacer le plateau (140) pour entraîner le sac (30) le long d'une goulotte (110) de remplissage, et
- remplir le sac (30) simultanément au déplacement du fond (31) du sac (30).

9. Procédé selon l'une des revendications 1 et 2, caractérisé par le fait qu'une portion (21) de la deuxième feuille (20) est soudée sur la face externe des parois du tube (14).

10. Procédé selon l'une des revendications précédentes, caractérisé par le fait qu'il comprend une étape consistant à réaliser une soudure à l'extrémité du tube (14) opposée au fond (31) du sac (30) pour fermer celui-ci.

11. Procédé selon l'une des revendications précédentes, caractérisé par le fait que la première (10) et la deuxième (20) feuilles sont de couleurs différentes.

12. Procédé selon l'une des revendications précédentes, caractérisé par le fait qu'il comprend une étape consistant à insérer des doigts (171, 172) par le haut du sac (30) pour tirer le bord libre supérieur et ouvert du sac (30), de manière à former deux bords parallèles à l'axe longitudinal de deuxièmes moyens de soudage transversaux (150).

13. Procédé selon l'une des revendications précédentes, caractérisé par le fait qu'il comprend une étape consistant à présouder un dispositif de fermeture (35) à la première feuille (10).

14. Procédé selon l'une des revendications précédentes, caractérisé par le fait qu'il comprend une étape consistant à fixer un dispositif de fermeture (35) à une extrémité supérieure du sac (30).

15. Procédé selon la revendication 14, caractérisé par le fait qu'il comprend une étape consistant à fixer un dispositif de fermeture (35) muni d'un curseur de fermeture, à l'extrémité supérieure du sac (30).

16. Procédé selon l'une des revendications précédentes, caractérisé par le fait qu'il comprend une étape consistant à placer à proximité du bord supérieur du sachet (30) et parallèlement à celui-ci, un élément de maintien (36) ayant des propriétés de plasticité et de rigidité telles qu'il est apte à conserver la forme qui lui est donnée par déformation.

17. Procédé selon la revendication 16, caractérisé par le fait qu'il comprend une étape consistant à plier le haut des parois du sachet (30) pour le ramener, de manière à être parallèle au dessus plat (32) du sachet (30) et contre ce dessus plat (32).

18. Procédé selon l'une des revendications 16 et 17, caractérisé par le fait qu'il comprend une étape consistant à rabattre des coins (33, 34) du sachet (30) sur les parois latérales (37, 38) du sachet (30).

19. Machine de formation de sacs comprenant :
- des moyens pour conformer un tube (14) avec une première feuille (10) ;
- des moyens pour acheminer une deuxième feuille (20) à l'extrémité du tube (14), à plat et perpendiculairement à l'axe du tube (14) ; et
- des moyens pour plier la deuxième feuille (20) à température ambiante et attacher cette deuxième feuille (20) à ladite extrémité du tube (14), pour former le fond (31) plat d'un sac, sans plier la première feuille (10).

20. Machine selon la revendication 19, caractérisée par le fait que c'est une machine (100) de formation, remplissage et fermeture automatiques de sacs.

21. Machine selon la revendication 20, caractérisée par le fait qu'elle comprend une goulotte (110) de remplissage verticale.

22. Machine selon l'une des revendications 20 et 21, caractérisée par le fait qu'elle comprend une goulotte (110) de remplissage verticale dont la section transversale est carrée.

23. Machine selon l'une des revendications 20 et 21, caractérisée par le fait qu'elle comprend une goulotte (110) de remplissage verticale dont la section transversale est rectangulaire.

24. Machine selon l'une des revendications 20 et 21, caractérisée par le fait qu'elle comprend une goulotte (110) de remplissage verticale dont la section transversale est ovale.

25. Machine selon l'une des revendications 19 à 24, caractérisée par le fait qu'elle comprend un plateau (140) dont les dimensions sont adaptées pour pouvoir pénétrer dans le tube (14) globalement perpendiculairement à l'axe de celui-ci.

26. Machine selon la revendication 25, caractérisée par le fait que le plateau (140) présente des deuxièmes moyens d'aspiration (145) pour maintenir le fond (31) de chaque sac (30) solidaire de celui-ci.

27. Machine selon l'une des revendications 19 à 26, caractérisée par le fait que des premiers moyens d'aspiration (135) sont réalisés dans des premiers moyens de soudage transversaux (130).

28. Machine selon la revendication 27, caractérisée par le fait que les premiers moyens de soudage transversaux (130) comprennent deux barres courtes (131) parallèles et deux barres longues de soudage (132) perpendiculaires aux barres courtes (131), ces deux barres longues (132) comportant des encoches (133) dans lesquelles viennent se loger les extrémités des deux barres courtes (131), afin de former une soudure sur tout le périmètre de ladite extrémité du tube (14).

29. Machine selon l'une de revendications 27 et 28, caractérisée par le fait qu'elle comporte des moyens de coupe (160) localisés dans les premiers moyens de soudage transversaux (130) pour couper le tube (14) dans lequel est formé un sac (30), au niveau du haut de ce sac (30).

30. Machine selon l'une des revendications 19 à 29, caractérisée par le fait qu'elle comprend des doigts (171, 172) pour tirer le bord libre supérieur et ouvert du sac (30), de manière à former deux bords parallèles à l'axe longitudinal de deux moyens de soudage transversaux (150).
